(19) Europäisches Patentamt
European Patent Office
Office européen des brevets

(11) EP 3 373 050 A1

(12) EUROPEAN PATENT APPLICATION
published in accordance with Art. 153(4) EPC

(43) Date of publication:
12.09.2018 Bulletin 2018/37

(51) Int Cl.:
G02B 5/30 (2006.01)     G02F 1/1335 (2006.01)

(21) Application number: 16803816.4

(22) Date of filing: 24.06.2016

(86) International application number:
PCT/KR2016/006806

(87) International publication number:
WO 2016/195463 (08.12.2016 Gazette 2016/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 05.06.2015 KR 20150080186

(71) Applicant: Kolon Industries, Inc.
Gwacheon-si, Gyeonggi-do 13837 (KR)

(72) Inventors:
• NAM, Si Wook
Yongin-si, Gyeonggi-do 446-797 (KR)
• KIM, Si Min
Yongin-si, Gyeonggi-do 446-797 (KR)
• CHAE, Heon Seung
Yongin-si, Gyeonggi-do 446-797 (KR)
• KIM, Kyung Jong
Yongin-si, Gyeonggi-do 446-797 (KR)
• HWANG, Hong Gu
Yongin-si, Gyeonggi-do 446-797 (KR)

(74) Representative: Ter Meer Steinmeister & Partner
Patentanwälte mbB
Nymphenburger Straße 4
80335 München (DE)

Remarks:
The filing date of the international application is within
two months from the date of expiration of the priority
period (R. 26bis.3 PCT).

(54) WIRE GRID POLARIZER AND LIQUID CRYSTAL DISPLAY DEVICE COMPRISING SAME

(57) The present invention relates to a wire grid polarizer and a liquid crystal display device comprising the wire grid polarizer, the wire grid polarizer comprising: a resin layer including a concave-convex pattern formed by a grid protrusion part (110); and a pattern layer of a metal grid (120) formed on the concave-convex pattern, wherein the grid protrusion part has an irregular form including at least one section in which at least one of a left side surface and a right side surface thereof includes a curved section or an inclined section that is inclined to form an acute angle with the ground.

FIG. 1

EP 3 373 050 A1

## Description

### Technical Field

The present invention relates to a wire grid polarizer. More particularly, the present invention relates to a nano-wire grid polarizer with a high polarizing efficiency and an improved polarizing luminance.

### Background Art

Polarizers pass or reflect light of specific polarization among electromagnetic waves. In General, in a liquid crystal display (LCD) device, images are implemented by liquid crystals that optically interact with each other within a liquid crystal cell by using one or two polarizers.

Currently, polarizers using absorptive polarizing films and wire grid polarizers are widely used. The absorptive polarizing films are manufactured by adsorbing iodine or dichroic dyes on a polyvinyl alcohol (PVA) film and orienting the adsorbed film to a specific direction. However, in such a case, a magnetic stress thereof with respect to a transmittance direction is weak, and polarization function thereof is degraded by being contracted by heat or moisture. In addition, theoretically, a polarizing efficiency cannot exceed 50% since the polarizer generates linear polarized light by passing light vibrating in a specific direction. Thus, it becomes a factor of degrading efficiency and luminance of an LCD.

Meanwhile, wire grid polarizers (hereinafter, WGP) refer to an array in which metal wires are arranged in parallel. The WGP reflects polarizing elements that are parallel to a metal grid (S-polarized light), passes polarizing elements that are perpendicular to the metal grid (P-polarized light), and reuses the reflected light. Thus, an LCD with a high luminance characteristic may be manufactured by using the WGP. However, in a WGP, when an arrangement period of a metal grid, in other words, gaps between metal wires, about equal to or greater than a wavelength of an incident electromagnetic wave, an absorption phenomenon occurs. In order to minimize light loss by the absorption, the arrangement period of a metal grid should be small. In other words, in a wire grid polarizer, gaps between metal wires (pattern pitch) should be a 1/2 of a wavelength of incident light to increase a polarization extinction ratio. In one embodiment, for visible lights having 400 to 700 nm wavelength generated in a backlight unit used in an LCD, polarizing characteristics may be expected when a pitch of a nano pattern is 200 to 320 nm or less.

Meanwhile, when scattered light from a light source of a backlight unit is radiated toward a WGP, theoretically, 100% of P-polarized light should passes through and 100% of S-polarized light should be reflected or absorbed. However, in reality, this may not occur. However, since a transmittance of P-polarized light is an important factor in determining a luminance of a display, a technique for increasing a transmittance of P-polarized light is very important in a WGP.

In addition, polarization efficiency that determines a contrast ratio (CR) of a display is calculated by a ratio between the difference between a parallel transmittance Tp of two polarizing films and a cross transmittance Tc and the sum thereof. When the ratio is close to 1, the contrast ratio is evaluated to be excellent, thus it is preferable to raise the Tp and lower Tc in order to obtain excellent polarizing efficiency. However, Tc may be lowered by increasing a laminating amount of metal but this may cause a decrease in TP. A trade-off relationship is formed between Tp and polarizing efficiency. Accordingly, various research has been conducted to improve both TP and polarizing efficiency in a WGP field.

As one embodiment of a conventional WGP, Korean Patent Application No. 2010-0102358 discloses a wire grid polarizer including a first grid layer including at least one first grid pattern, a second grid later including at least one second grid pattern formed of metal materials on the first grid pattern, and a light absorbing layer laminated on the second grid layer and absorbing light from the outside whereby the wire grid polarizer improves luminance without decreases in a contrast ratio. In addition, Korean Patent No. 10-1336097 discloses an LCD device with improved polarizing performance and light efficiency by including a wire grid polarizer in which each area has a pattern different from each other, and at least one of a pattern period P, a pattern height H, a pattern width W, and a pattern duty cycle DC is different for each area.

Meanwhile, there is no conventional WGP providing an excellent transmittance of P-polarized light and polarizing efficiency by efficiency improving a laminating amount of metal without degrading the transmittance of P-polarized light.

### Disclosure

### Technical Problem

Accordingly, an object of the present invention is to provide a polarizer simultaneously improving a transmittance of P-polarized light and polarizing efficiency which are in a trade-off relation by applying a pattern structure whereby more metal is laminated relative to a pattern of a conventional WGP having the same line width and pitch, and a liquid crystal display device including the same.

**Technical Solution**

In order to accomplish the above object, a first preferred implementation example according to the present invention is a wire grid polarizer including: a resin layer including a concave-convex pattern formed by a grid protrusion part 110; and a pattern layer of a metal grid 120 formed on the concave-convex pattern, wherein the grid protrusion part has an irregular form including at least one section in which at least one of a left side surface and a right side surface thereof includes a curved section or an inclined section that is inclined to form an acute angle with the ground.

In the first implementation example, the grid protrusion part may include at least one protruded portion and at least one recessed portion, and a distance between a point P1 where a virtual line drawn vertically from a maximally protruded portion 111 to the ground and a point P2 where a virtual line drawn vertically from a maximally recessed portion 112 to the ground based on an identical direction may be 1 to 30 nm.

Herein, the metal grid pattern layer may be formed to be in contact with the grid protrusion part, and the metal grid pattern layer being formed by initially filling metal from the maximally recessed portion to have a laminating width 121 of 10 to 100 nm horizontally formed from the maximally protruded portion to an end of the metal grid pattern. In addition, the metal grid pattern may be formed to be in contact with the grid protrusion part, and to have a height 122 of 10 to 200 nm from a top of the grid protrusion part in a vertical direction.

In the first implementation example, the side surface of the grid protrusion part may have a form including a curved section, and based on a longitudinal cross-sectional form of the grid protrusion part and based on the ground and a horizontal direction, the form including: at least any one curved section of a section in which a width of the grid protrusion part increases and then decreases; a section in which the width of the grid protrusion part increases and then becomes constant; a section in which the width of the grid protrusion part decreases and then increases; a section in which the width of the grid protrusion part decreases and then becomes constant; a section in which the width of the grid protrusion part is constant and then increases; a section in which the width of the grid protrusion part is constant and then decreases; a section that maintains a constant width but changes in an inclined direction of the grid protrusion part, wherein the curved section may have a sharp form or a curved form.

In addition, in the first implementation example, the side surface of the grid protrusion part may have a form including an inclined section that is inclined to form an acute angle with the ground, and based on a longitudinal cross-sectional form of the grid protrusion part and based on the ground and a horizontal direction, the grid protrusion part has a form in which a width of the grid protrusion part decreases from an upper portion to lower portion thereof at a constant rate, or a form that is inclined to one side while maintaining a constant width.

Meanwhile, in the first implementation example, based on a longitudinal cross-sectional form of a protruded portion, the grid protrusion part may have a line width 113 being 5 to 100 nm, the line width 113 being defined as the maximum width of the grid protrusion part based on the ground and a horizontal direction. In addition, the grid protrusion part may have a height 114 being 10 to 500 nm formed in a direction perpendicular to the ground.

In addition, in the first implementation example, a pitch 115 between the grid protrusion parts may be formed to be 20 to 200 nm, the pitch 115 being defined as a distance from a leftmost vertical line drawn in an arbitrary grid protrusion part to a leftmost vertical line drawn in a neighboring grid protrusion part when a virtual vertical line perpendicular to the ground and in contact with an outer surface of the protruded portion is drawn.

In addition, in the first implementation example, a transmittance of a P-polarized light of the wire grid polarizer may be 50 to 100%, and a polarizing efficiency of the wire grid polarizer may be 99.0000 to 99.9999%

In addition, according to the optical characteristic of the wire grid polarizer of the first implementation example, a second preferred implementation example according to the present invention is a liquid crystal display device including a wire grid polarizer of the first implementation example.

**Advantageous Effects**

According to the present invention, polarizing efficiency may be improved without decreasing a transmittance of P-polarized light since a laminating amount of metal laminated on a grid pattern is effectively increased compared to a conventional WGP pattern having the same range of a pitch and a line width.

**Description of Drawings**

FIG. 1 is a cross-sectional view showing various forms of grid protrusion parts 110 and a relation between a maximally protruded portion 111 and a maximally recessed portion 112 in an arbitrary grid protrusion part 110.
FIG. 2 is a cross-sectional view showing a line width 113 and a height 114 of a grid protrusion part and a height 122 and a width 121 of a metal grid formed to be in contact with the grid protrusion part.

FIG. 3 is a cross-sectional view showing various embodiments of the grid protrusion part of the present invention which includes a side surface with curved sections.

FIG. 4 is a cross-sectional view showing various embodiments of the grid protrusion part of the present invention which includes a side surface with an inclined section to form an acute angle with the ground.

FIG. 5 is a cross-sectional view showing a pitch 115 between grid protrusion parts.

<Description of reference numerals>

100: grid unit of WGP
110: grid protrusion part
111: maximally protruded portion of grid protrusion part
112: maximally recessed portion of grid protrusion part
113: line width of grid protrusion part
114: height width of grid protrusion part
115: pitch between grid protrusion parts
120: metal grid
121: width of metal grid from maximally recessed portion of grid protrusion part
122: height of metal grid from the top of the grid protrusion part

**Best Mode**

The present invention provides a wire grid polarizer (hereinafter, WGP) including a resin layer including a concave-convex pattern formed by a grid protrusion part 110, and a pattern layer of a metal grid 120 formed on the concave-convex pattern, wherein the grid protrusion part 110 has an irregular form in which at least one of a left side surface and a right side surface includes at least one curved section or inclined section to form an acute angle with the ground, and a liquid crystal display device including the same.

As seen from the drawings, the WGP of the present invention includes the grid protrusion part 110 which is formed to be obliquely inclined or formed with a curved side surface rather than a conventional one including a straight side surface that vertically extends. Thus, the WGP of the present invention represents a differentiated pattern from the conventional one. Particularly, by using such an unusual form of the grid protrusion part, a valley form may be formed on at least one of a left side surface and a right side surface, and metal is filled in the valley form. Therefore, polarizing efficiency may be improved without decreasing a transmittance of P-polarized light since a laminating amount of metal laminated on a grid pattern is effectively increased compared to a conventional WGP pattern having the same range of a line width, a height, and a pitch.

Hereinafter, the present invention will be described in more detail with reference to the drawings

In the present invention, since the side surface of the grid protrusion part 110 includes the inclined section or at least one curved section, the grid protrusion part 110 may include at least one protruded portion and at least one recessed portion. Herein, for the protruded portion and the recessed portion described in the present invention, it is preferable to determine a part forming a hill formed from the side surface of each grid protrusion part as the protruded portion, and to determine a part forming a valley as the recessed portion. When the grid protrusion part includes a single protruded portion and a single recessed portion, it is preferable to form the recessed portion to be positioned closer to the inside of the grid protrusion part. However, when at least two protruded portions and recessed portions are included, an arbitrary protruded portion may be positioned closer to the inside of the grid protrusion part than an arbitrary recessed portion. In other words, it is preferable to determine positions of the protruded portion and the recessed portion depending on a form of the grid protrusion part rather than relative positions thereof.

Meanwhile, for the protruded portion and the recessed portion of the present invention, it is preferable for a distance between a point P1 where a virtual line drawn vertically from a maximally protruded portion 111 to the ground and a point P2 where a virtual line drawn vertically from a maximally recessed portion 112 to the ground based on an identical direction to be 1 to 30 nm.

In the present invention, the form of the grid protrusion part may not be symmetrical. The form of the grid protrusion part may have right and left protruded and recessed portions having irregular forms, or may have a protruded portion and a recessed portion on a specific side. However, when a distance in a horizontal direction between the maximally protruded portion and the maximally recessed portion, in other words, distance between P1 and P2, is smaller than 1 nm, an effect of improving of laminating amount of metal in the recessed portion may be small. It is difficult to deeply form the recessed portion so that the distance exceeds 30 nm in a fine pattern. Even though it is formed, it may be difficult to completely fill the metal up the depth of the maximally recessed portion.

When the recessed portion is formed in the grid protrusion part as described above, since the metal is filled in the recessed portion, the laminating amount of metal may be easily increased compared with a general pattern having the same line width and pitch. In the WGP, light is polarized and reflected by a metal pattern layer, and when the laminating amount of metal increases, the reflectance may increase thereby polarizing efficiency may be improved. In general, when the laminating amount of metal is excessively increased to improve the reflectance, the luminance may be lowered since a light transmission range becomes excessively narrowed. However, in the present invention, the polarizing efficiency may be improved without degrading the luminance and without narrowing the light transmission range by filling the recessed portion formed on the side surface with metal under the same range and line width condition.

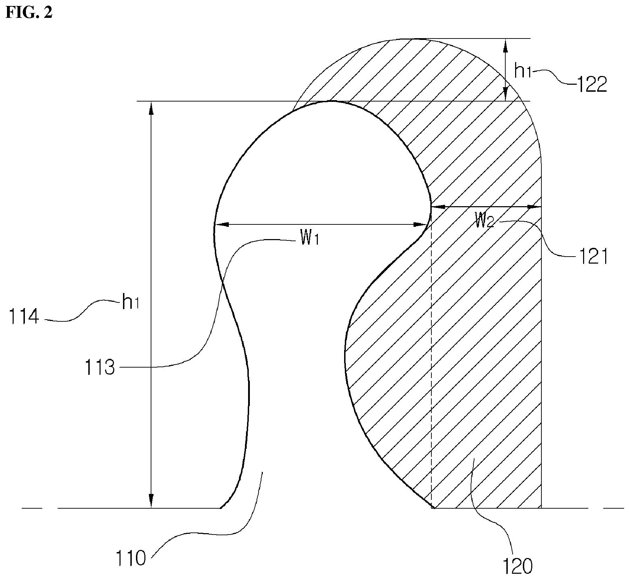

Meanwhile, in the present invention, as shown in FIG. 2, the metal grid 120 of the metal grid pattern is formed in which a metal layer is in contact with the grid protrusion part of a grid unit 100 of WGP. Herein, in order to effectively improve the polarizing efficiency, it is preferable for the metal grid to be formed by initially filling metal from the maximally recessed portion of the grid protrusion part to have a laminating width in a horizontal direction from the maximally protruded portion. In other words, it is preferable for the metal grid to have a width 121 of 10 to 100 nm from the maximally protruded portion to an end of the metal grid pattern.

In addition, it is preferable for the metal grid to be formed to be in contact with the grid protrusion part with metal thereof and to have a height 122 of 10 to 200 nm in a vertical direction from a top of the grid protrusion part. By forming the metal grid to have the above height and weight, the effect of improving the polarizing efficiency accompanying the increase in the laminating amount of metal may be large. In addition, since the metal is uniformly laminated in a vertical direction and in a horizontal direction based on the grid protrusion part, it is possible to prevent the grid protrusion part from collapsing due to the metal grid and blocking a light transmission path.

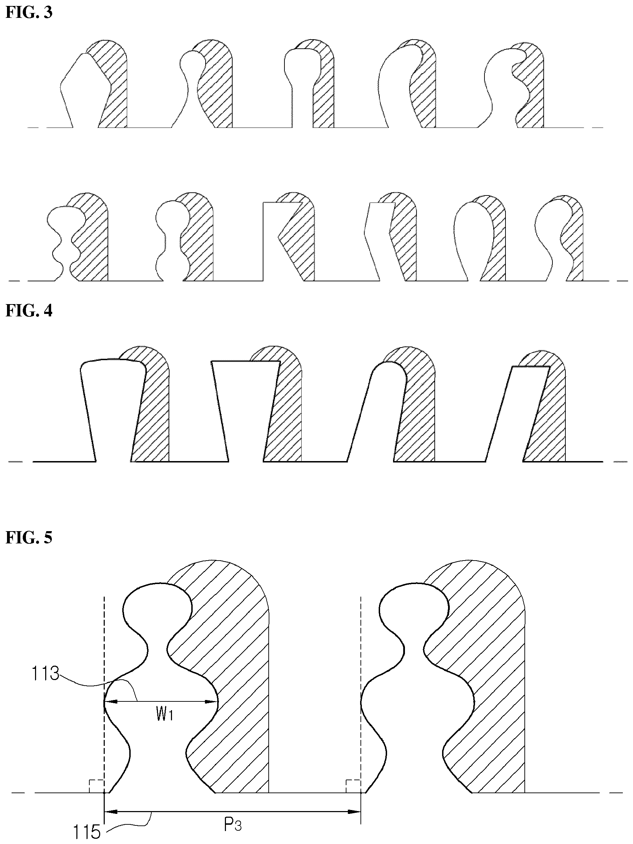

According to a preferred aspect of the present invention, as shown in an example of FIG. 3, the grid protrusion part has a form including a side surface with a curved section. Based on a longitudinal cross-sectional form of the grid protrusion part and based on the ground and a horizontal direction, the grid protrusion part may have a form including a curved section of at least one of a section in which a width of the grid protrusion part increases and then decreases, a section in which the width of the grid protrusion part increases and then becomes constant, a section in which the width of the grid protrusion part decreases and then increases, a section in which the width of the grid protrusion part decreases and the becomes constant, a section in which the width of the grid protrusion part is constant and then increases, a section in which the width the grid protrusion part is constant and then decreases, and a section that maintains a constant width but changes the inclined direction of the grid protrusion part. Herein, in the present invention, the curved section may mean both sharp form and curved form.

In addition, the grid protrusion part of the present invention has a form including a side surface with an inclined section that is inclined to form an acute angle with the ground. As shown in FIG. 4, based on a longitudinal cross-sectional form of the grid protrusion part and based on the ground and a horizontal direction, the grid protrusion part may have a form in which a width of the grid protrusion part decreases from an upper portion to lower portion thereof at a constant rate, or a form that is inclined to one side while maintaining a constant width. Herein, in the form in which the width of the grid protrusion part decreases from the upper portion to lower portion thereof at a constant rate, inclined sections of both side surfaces form an acute angle with the ground. In the form that is inclined to one side while maintaining a constant width, a slope is generated by an acute angle formed by the ground and a side surface of a direction to which the grid protrusion part is inclined.

In addition, according to a preferred embodiment of the present invention, based on a longitudinal cross-sectional form of the grid protrusion part with reference to FIG.2, when a line width of the grid protrusion part is defined as the maximum width of the grid protrusion part based on the ground and a horizontal direction, in order to imprint close to a desired form, it is preferable to form a line width 113 to be 5 to 100 nm, and a height 114 to be 10 to 500 nm based on the ground and a vertical direction. It may be difficult to implement a pattern having a line width and a height of the grid protrusion part exceeding the above ranges, and pattern agglomeration may occur when the line width and the height excessively exceed the above range.

In addition, referring to FIG. 5, it is preferable for a pitch 115 to be 20 to 200 nm. The pitch 115 is defined as, when a virtual vertical line perpendicular to the ground and in contact with an outer surface of the grid protrusion part is drawn, a distance from a leftmost vertical line drawn in an arbitrary grid protrusion part to a leftmost vertical line drawn in a neighboring grid protrusion part. When a pitch value is smaller than 20 nm, it is difficult to ensure a light transmission path after forming a metal grid. When the pitch value exceeds 200 nm, it is difficult to expect excellent polarizing characteristics (extinction ratio) for visible lights. Herein, the pitch value may be defined as a distance from the left most vertical line drawn in an arbitrary grid protrusion part to the left most vertical line drawn in the neighboring grid protrusion part.

Meanwhile, according to a preferred embodiment of the present invention, it is preferable to form the resin layer with at least one curable resin selected from a group including an acrylic resin, a methacrylic resin, a polyvinyl resin, a polyester resin, a styrene resin, an alkyd resin, an amino resin, a polyurethane resin, and a silicon resin.

Herein, more specific examples of the curable resin include unsaturated polyester, methyl metahcrylate, ethyl methacrylate, isobutyl metahcrylate, normal butyl metahcrylate, normal butyl methyl methacrylate, acrylic acid, methacrylic acid, hydroxyethyl methacrylate, hydroxypropyl methacrylate, hydroxyethyl acrylate, acrylamide, methylolacrylamide, glycidyl methacrylate, ethyl acrylate, isobutyl acrylate, normal butyl acrylate, homopolymer of 2-ethylhexyl acrylate, copolymer or terpolymer thereof, etc.

In addition, in the present invention, the metal grid pattern may be formed of any metal selected from a group including aluminum, copper, chromium, platinum, gold, silver, nickel and alloys thereof. In an aspect of an excellent reflectance in a visible light region, it is preferable to select silver or aluminum. It may be more preferable to select aluminum when considering the manufacturing cost. As a method of laminating metal particles on an upper part of the curable resin, sputtering, thermal evaporation, electron-beam evaporation, dry etching method forming a metal layer by simultaneously etching polymer and metal, etc. may be used. However, it is not limited thereto.

The present invention may further include a substrate layer in a lower part of the resin layer. Herein, it is preferable to apply a transparent substrate showing isotropy so that the polarizing effect is not lost by the orientation. The substrate layer supports the resin layer and the metal pattern layer. A thickness thereof may be $5\mu m$ to $100\mu m$, and more preferably from $10\mu m$ to $50\mu m$, so as to be advantageous in terms of mechanical strength and flexibility.

As a preferred embodiment of the substrate layer, the substrate layer may be any film or glass film selected from a group including a polyethylene terephthalate film, a polycarbonate film, a polypropylene film, a polyethylene film, a polystyrene film, a polyepoxy film, a cyclic olefin-based polymer (COP) film, a cyclic olefin-based copolymer (COC) film, a polycarbonate resin, and a copolymer film of cyclic olefin-based polymer, and a copolymer film of a polycarbonate-based resin and a cyclic olefin-based copolymer.

As describe above, since the WGP of the present invention includes a grid protrusion part having a form differentiated from the conventional WGP, the transmittance of the P-polarized light may become 50 to 100%, and polarizing efficiency may become 99.0000 to 99.9999%, and the luminance may be 100 to 200%. Accordingly, the WGP of the present invention may be usefully applied to a liquid crystal display device due to such excellent optical properties.

**Mode for Invention**

Examples

Hereinafter, the present invention will be described in more detail with reference to examples. The examples are for the purpose of illustrating the present invention more specifically, and the present invention is not limited thereto.

Examples 1 to 4: example WGPs 1 to 4 including a grid protrusion part and a metal grid satisfying conditions of Table 1 are prepared. Herein, the resin layer is formed of methyl methacrylate, aluminum Al is used as the metal pattern layer, and a COC film (Kolon) having a thickness of $80\mu m$ is used as the substrate layer

Comparative example 1: a commercially available PVA absorptive polarizing film is prepared in comparative Example 1.

Comparative examples 2 to 3: comparative examples 2 and 3 including a conventional grid protrusion part in which a protruded portion and a recessed portion are not present in contrast with the examples 1 to 4, and satisfying conditions of the below Table 1 are prepared. Herein, a resin layer, a metal pattern layer, and a substrate layer which are used in the WGP of the comparative examples 2 and 3 are the same as those used in the examples 1 to 4.

Table 1

[Table1]

|  | Grid protrusion part | | | | Metal gird | |
|---|---|---|---|---|---|---|
|  | Line width (nm) | Height (nm) | Pitch (nm) | \|P1-P2\|[1] (nm) | Thickness[2] (nm) in horizontal direction from maximally protruded portion of grid protrusion part | Thickness (nm) in vertical direction from maximally top of grid protrusion part |
| Example 1 | 30 | 150 | 100 | 5 | 50 | 70 |
| Example 2 | 30 | 150 | 100 | 15 | 50 | 70 |
| Example 3 | 50 | 150 | 100 | 5 | 50 | 70 |
| Example 4 | 50 | 150 | 100 | 15 | 50 | 70 |

(continued)

| | Grid protrusion part | | | | Metal gird | |
|---|---|---|---|---|---|---|
| | Line width (nm) | Height (nm) | Pitch (nm) | \|P1-P2\|[1] (nm) | Thickness[2] (nm) in horizontal direction from maximally protruded portion of grid protrusion part | Thickness (nm) in vertical direction from maximally top of grid protrusion part |
| Comparative example 1 | PVA absorptive polarizing film | | | | | |
| Comparative example 2 | 30 | 150 | 100 | 0 | 50 | 70 |
| Comparative example 3 | 50 | 150 | 100 | 0 | 50 | 70 |

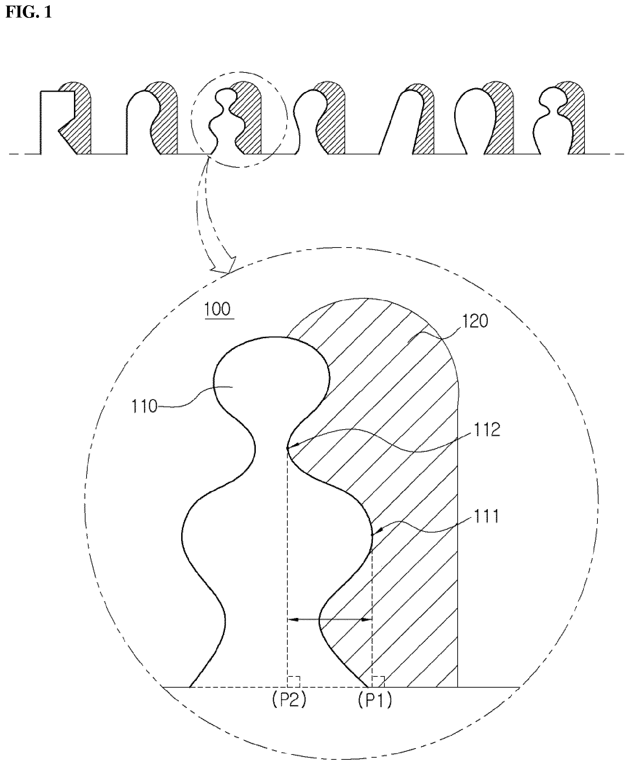

1) Distance between a point where a virtual line drawn vertically from the maximally protruded portion to the ground and a point where a virtual line drawn vertically from the maximally recessed portion to the ground. Refer to the reference numerals of Fig. 1.

2) Thickness laminated from the side surface of the grid protrusion part in a horizontal direction is applied to comparative examples 2 and 3.

Measurement example

By using RETS-100 equipment (OTSUKA ELECTRONICS), the transmittance Tp of P-polarized light and the transmittance Ts of S-polarized light of polarizing films of the example 1 to 4 and the comparative examples 1 to 3 are measured by using the following method. Using the measured values, the polarizing efficiency PE is calculated according to the following formula 1, and the results are shown in the below Table 2.

$$\text{Formula 1)}$$

$$PE(\%) = \sqrt{\frac{Tp - Ts}{Tp + Ts}} \times 100$$

In addition, after removing a lower polarizing film of a panel of a 5.5 inch liquid crystal display, luminance values are measured by attaching the polarizing films of the prepared examples and comparative examples. The luminance values are measured by measuring the maximum luminance (white) in arbitrary five points by using BM-7A (TOPCON, Japan). The luminance values are evaluated by calculating average values of the measured values.

Table 2

[Table 2]

| | P-polarized light transmittance (%) | S-polarized light transmittance (%) | Polarizing efficiency (%) | Maximum Luminance |
|---|---|---|---|---|
| Example 1 | 84.32 | 0.005 | 99.994 | 145 |
| Example 2 | 84.21 | 0.001 | 99.999 | 137 |
| Example 3 | 80.23 | 0.006 | 99.993 | 132 |
| Example 4 | 80.28 | 0.001 | 99.999 | 130 |
| Comparative example 1 | 79.87 | 0.007 | 99.991 | 100 |

(continued)

|  | P-polarized light transmittance (%) | S-polarized light transmittance (%) | Polarizing efficiency (%) | Maximum Luminance |
|---|---|---|---|---|
| Comparative example 2 | 75.24 | 0.030 | 99.960 | 117 |
| Comparative example 3 | 72.21 | 0.042 | 99.942 | 112 |

According to the result of Table 2, it is confirmed that the transmittance of the P-polarized light in the examples 1 to 4 including a distance between the maximally protruded portion and the maximally recessed portion has been remarkably improved as compared with the comparative examples 1 to 3. Thus, the luminance values are very excellent. At the same time, the transmittance of the S-polarized light becomes lower and the polarizing efficiency is measured to be more than 99.99%. In cases of the comparative examples 2 and 3 in which a maximally protruded portion and a maximally recessed portion are not present, the transmittance of the P-polarized light and the polarizing efficiency are found to be less than the examples of the present invention.

**Claims**

1. A wire grid polarizer, comprising:

   a resin layer including a concave-convex pattern formed by a grid protrusion part (110); and
   a pattern layer of a metal grid (120) formed on the concave-convex pattern, wherein
   the grid protrusion part has an irregular form including at least one section in which at least one of a left side surface and a right side surface thereof includes a curved section or an inclined section that is inclined to form an acute angle with the ground.

2. The wire grid polarizer of claim 1, wherein since the side surface of the grid protrusion part includes at least one curved or inclined section, the grid protrusion part includes at least one protruded portion and at least one recessed portion, and a distance between a point (PI) where a virtual line drawn vertically from a maximally protruded portion (111) to the ground and a point (P2) where a virtual line drawn vertically from a maximally recessed portion (112) to the ground based on an identical direction is 1 to 30 nm.

3. The wire grid polarizer of claim 2, wherein the metal grid pattern layer is formed to be in contact with the grid protrusion part, and the metal grid pattern layer being formed by initially filling metal from the maximally recessed portion to have a laminating width (121) of 10 to 100 nm horizontally formed from the maximally protruded portion to an end of the metal grid pattern layer.

4. The wire grid polarizer of claim 2, wherein the metal grid pattern layer is formed to be in contact with the grid protrusion part, and to have a height (122) of 10 to 200 nm from a top of the grid protrusion part in a vertical direction.

5. The wire grid polarizer of claim 1, wherein the side surface of the grid protrusion part has a form including a curved section, and based on a longitudinal cross-sectional form of the grid protrusion part and based on the ground and a horizontal direction, the form including: at least any one curved section of a section in which a width of the grid protrusion part increases and then decreases; a section in which the width of the grid protrusion part increases and then becomes constant; a section in which the width of the grid protrusion part decreases and then increases; a section in which the width of the grid protrusion part decreases and then becomes constant; a section in which the width of the grid protrusion part is constant and then increases; a section in which the width of the grid protrusion part is constant and then decreases; and a section that maintains a constant width but changes in an inclined direction of the grid protrusion part, wherein the curved section has a sharp form or a curved form.

6. The wire grid polarizer of claim 1, wherein the side surface of the grid protrusion part has a form including an inclined section that is inclined to form an acute angle with the ground, and based on a longitudinal cross-sectional form of the grid protrusion part and based on the ground and a horizontal direction, the grid protrusion part has a form in which a width of the grid protrusion part decreases from an upper portion to lower portion thereof at a constant rate, or a form that is inclined to one side while maintaining a constant width.

7. The wire grid polarizer of claim 1, wherein, based on a longitudinal cross-sectional form of the grid protrusion part, the grid protrusion part has a line width (113) being 5 to 100 nm, the line width (113) being defined as the maximum width of the grid protrusion part based on the ground and a horizontal direction.

8. The wire grid polarizer of claim 1, wherein the grid protrusion part has a height (114) being 10 to 500 nm formed in a direction perpendicular to the ground.

9. The wire grid polarizer of claim 1, wherein a pitch (115) between the grid protrusion parts is formed to be 20 to 200 nm, the pitch (115) being defined as a distance from a leftmost vertical line drawn in an arbitrary grid protrusion part to a leftmost vertical line drawn in a neighboring grid protrusion part when a virtual vertical line perpendicular to the ground and in contact with an outer surface of the grid protrusion part is drawn.

10. The wire grid polarizer of claim 1, wherein a transmittance of a P-polarized light of the wire grid polarizer is 50 to 100%, and a polarizing efficiency of the wire grid polarizer is 99.0000 to 99.9999%

11. The wire grid polarizer of claim 1, wherein a luminance of the wire grid polarizer is 100 to 200%.

12. A liquid crystal display device including a wire grid polarizer of any one of claims 1 to 11.

**FIG. 1**

**FIG. 2**

EP 3 373 050 A1

**FIG. 3**

**FIG. 4**

**FIG. 5**

113

W₁

115

P₃

12

## INTERNATIONAL SEARCH REPORT

| | International application No. |
|---|---|
| | **PCT/KR2016/006806** |

### A. CLASSIFICATION OF SUBJECT MATTER

*G02B 5/30(2006.01)i, G02F 1/1335(2006.01)i*

According to International Patent Classification (IPC) or to both national classification and IPC

### B. FIELDS SEARCHED

Minimum documentation searched (classification system followed by classification symbols)

G02B 5/30; B82Y 40/00; G02B 5/18; G11B 7/135; G02F 1/13; G02F 1/1335

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: wire grid polarizing plate, grid, convex, acute angle, metal

### C. DOCUMENTS CONSIDERED TO BE RELEVANT

| Category* | Citation of document, with indication, where appropriate, of the relevant passages | Relevant to claim No. |
|---|---|---|
| A | JP 5235208 B2 (ASAHI KASEI E-MATERIALS CORP.) 10 July 2013<br>See paragraphs [0020]-[0026] and figures 1-2. | 1-12 |
| A | JP 4387141 B2 (RICOH CO., LTD.) 16 December 2009<br>See paragraph [0011] and figure 1. | 1-12 |
| A | KR 10-2014-0067067 A (ASAHI KASEI E-MATERIALS CORPORATION) 03 June 2014<br>See claims 1-3 and figure 1. | 1-12 |
| A | KR 10-2009-0058391 A (MIRAENANOTECH CO., LTD.) 09 June 2009<br>See claims 1-3 and figures 2a-2c. | 1-12 |
| A | KR 10-0642003 B1 (LG ELECTRONICS INC.) 02 November 2006<br>See claim 1 and figure 4. | 1-12 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 OCTOBER 2016 (04.10.2016) | **05 OCTOBER 2016 (05.10.2016)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2016/006806**

| Patent document cited in search report | Publication date | Patent family member | Publication date |
|---|---|---|---|
| JP 5235208 B2 | 10/07/2013 | JP 2010-286844 A | 24/12/2010 |
| JP 4387141 B2 | 16/12/2009 | JP 2005-055773 A | 03/03/2005 |
| KR 10-2014-0067067 A | 03/06/2014 | CN 103842862 A | 04/06/2014 |
| | | JP 2016-027418 A | 18/02/2016 |
| | | KR 10-1622056 B1 | 17/05/2016 |
| | | KR 10-2016-0042146 A | 18/04/2016 |
| | | TW 201329536 A | 16/07/2013 |
| | | TW I499812 B | 11/09/2015 |
| | | US 2014-0293142 A1 | 02/10/2014 |
| | | WO 2013-054900 A1 | 18/04/2013 |
| KR 10-2009-0058391 A | 09/06/2009 | KR 10-0956508 B1 | 06/05/2010 |
| KR 10-0642003 B1 | 02/11/2006 | NONE | |

Form PCT/ISA/210 (patent family annex) (January 2015)

## REFERENCES CITED IN THE DESCRIPTION

**Patent documents cited in the description**

- KR 20100102358

- KR 101336097